# EUROPEAN PATENT APPLICATION

(11) **EP 4 586 658 A1**
(43) Date of publication of application: **16.07.2025**
(21) Application number: 22957808.3
(22) Date of filing: 09.09.2022
(51) Int. Cl.: H04W 4/80

(54) **COMMUNICATION METHOD AND COMMUNICATION APPARATUS**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN); XU, Weijie, Dongguan, Guangdong 523860 (CN); HE, Chuanfeng, Dongguan, Guangdong 523860 (CN); ZUO, Zhisong, Dongguan, Guangdong 523860 (CN)
(74) Representative: RGTH
(86) International application number: PCT/CN2022/118251
(87) International publication number: WO 2024/050840

(57) **Abstract**

Provided are a communication method and a communication apparatus. The method comprises: a terminal device performs backscatter communication; and when a preset condition is satisfied, the terminal device switches to active transmission communication. According to the method in embodiments of the present application, the power consumption of the terminal device can be reduced while the transmission delay is ensured.

## Description

### TECHNICAL FIELD

This application relates to the field of communications technologies, and more specifically, to a communication method and a communications apparatus.

### BACKGROUND

With development of communications technologies, a terminal device that supports dual-mode transmission is introduced into some communications systems. To be specific, the terminal device supports both backscatter communication and active transmission communication. For a communication process, if the terminal device is allowed to adopt two communication modes, namely, backscatter communication and active transmission communication, how the terminal device determines one of the two communication modes is a problem to be solved.

### SUMMARY

This application provides a communication method and a communications apparatus. The following describes various aspects involved in embodiments of this application.

According to a first aspect, a communication method is provided, including: performing, by a terminal device, backscatter communication; and in a case that a preset condition is met, switching, by the terminal device, to active transmission communication.

According to a second aspect, a communication method is provided, including: receiving, by a network device, first information transmitted by a terminal device, where the first information is used by the network device to determine a maximum backscatter communication number.

According to a third aspect, a communication method is provided, including: receiving, by a network device, second information transmitted by a terminal device, where the second information is used by the network device to determine a maximum backscatter communication time.

According to a fourth aspect, a communications apparatus is provided, including: a backscatter unit, configured to perform backscatter communication; and a switching unit, configured to: in a case that a preset condition is met, switch to active transmission communication.

According to a fifth aspect, a communications apparatus is provided, including: a receiving unit, configured to receive first information transmitted by a terminal device, where the first information is used by the apparatus to determine a maximum backscatter communication number.

According to a sixth aspect, a communications apparatus is provided, including: a receiving unit, configured to receive second information transmitted by a terminal device, where the second information is used by the apparatus to determine a maximum backscatter communication time.

According to a seventh aspect, a communications apparatus is provided, and includes a memory, a transceiver, and a processor, where the memory is configured to store a program, the processor performs data transmission and receiving by using the transceiver, and the processor is configured to invoke the program in the memory to perform the method according to the first aspect.

According to an eighth aspect, a communications apparatus is provided, including a memory, a transceiver, and a processor, where the memory is configured to store a program, the processor performs data transmission and receiving by using the transceiver, and the processor is configured to invoke the program in the memory to perform the method according to the second aspect or the third aspect.

According to a ninth aspect, a communications apparatus is provided, including a processor, configured to invoke a program from a memory to perform the method according to the first aspect.

According to a tenth aspect, a communications apparatus is provided, including a processor, configured to invoke a program from a memory to perform the method according to the second aspect or the third aspect.

According to an eleventh aspect, a chip is provided, including a processor, configured to invoke a program from a memory, to cause a device installed with the chip to perform the method according to the first aspect.

According to a twelfth aspect, a chip is provided, including a processor, configured to invoke a program from a memory, to cause a device installed with the chip to perform the method according to the second aspect or the third aspect.

According to a thirteenth aspect, a computer-readable storage medium is provided, where the computer-readable storage medium stores a program, and the program causes a computer to perform the method according to the first aspect.

According to a fourteenth aspect, a computer-readable storage medium is provided, where the computer-readable storage medium stores a program, and the program causes a computer to perform the method according to the second aspect or the third aspect.

According to a fifteenth aspect, a computer program product is provided, including a program, where the program causes a computer to perform the method according to the first aspect.

According to a sixteenth aspect, a computer program product is provided, including a program, where the program causes a computer to perform the method according to the second aspect or the third aspect.

According to a seventeenth aspect, a computer program is provided, where the computer program causes a computer to perform the method according to the first aspect.

According to an eighteenth aspect, a computer program is provided, where the computer program causes a computer to perform the method according to the second aspect or the third aspect.

In embodiments of this application, the terminal device performs the backscatter communication, so that power consumption of the terminal device can be reduced. In a case that the preset condition is met, the terminal device switches to the active transmission communication. This can avoid a case that the backscatter communication is continuously performed but transmission continuously fails, increase a success rate of data transmission, and reduce a transmission delay. Therefore, according to a method in embodiments of this application, power consumption of the terminal device can be reduced while ensuring a short transmission delay.

### BRIEF DESCRIPTION OF DRAWINGS

FIG. 1 is a schematic diagram of a wireless communications system according to an embodiment of this application.
FIG. 2 is a schematic diagram of a zero-power communications system according to an embodiment of this application.
FIG. 3 is a schematic structural diagram of a power harvesting module according to an embodiment of this application.
FIG. 4 is a schematic diagram of a backscatter communication principle according to an embodiment of this application.
FIG. 5 is a circuit diagram of a terminal device based on a resistive load modulation technology according to an embodiment of this application.
FIG. 6 is a schematic flowchart of a communication method according to an embodiment of this application.
FIG. 7 is a schematic diagram of a communication mode based on a maximum backscatter communication number.
FIG. 8 is a schematic diagram of a communication mode based on a maximum backscatter communication time.
FIG. 9 is a schematic structural diagram of a communications apparatus according to an embodiment of this application.
FIG. 10 is a schematic structural diagram of a communications apparatus according to another embodiment of this application.
FIG. 11 is a schematic structural diagram of a communications apparatus according to still another embodiment of this application.
FIG. 12 is a schematic structural diagram of an apparatus according to an embodiment of this application.

### DESCRIPTION OF EMBODIMENTS

The technical solutions in this application are described below with reference to the accompanying drawings.

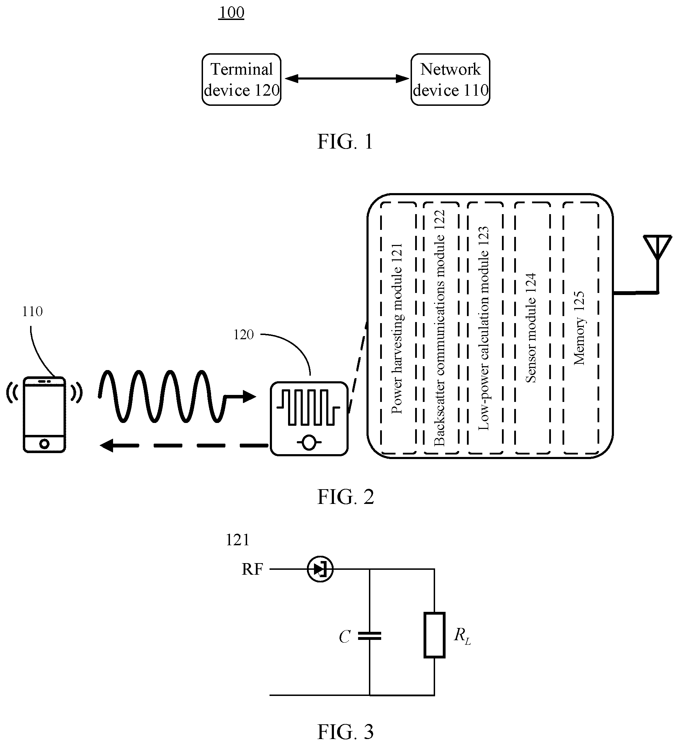

FIG. 1 shows an architecture of a wireless communications system 100 to which an embodiment of this application is applicable. The architecture shown in FIG. 1 includes a network device 110 and a terminal device 120. The network device 110 may be a device that communicates with the terminal device 120. The network device 110 may provide communication coverage for a specific geographic area, and may communicate with the terminal device 120 located within the coverage.

The network device 110 and the terminal device 120 may communicate based on a backscatter (back scattering) communication technology. In a backscatter communication technology, a signal used for backscatter communication is crucial. The signal used for backscatter communication is a radio signal, such as a radio frequency signal. The signal used for backscatter communication may include, for example, a power supply signal, a carrier signal, and the like. In some embodiments, the network device 110 may transmit a power supply signal to the terminal device 120 to supply power to the terminal device. In some other embodiments, the terminal device 120 may transmit data to the network device 110 by using a carrier signal. In some implementations, the power supply signal may further carry data or control information transmitted by the network device 110 to the terminal device 120. Certainly, the power supply signal may also be used only for power supply. This is not limited in embodiments of this application.

It should be noted that FIG. 1 exemplarily shows one network device and one terminal device. Optionally, the communications system 100 may include a plurality of network devices, and another quantity of terminal devices may be included within coverage of each network device. This is not limited in embodiments of this application.

In addition, in some implementations, the communications system 100 may further include another network entity such as a network controller or a mobility management entity. This is not limited in embodiments of this application.

It should be understood that the technical solutions of embodiments of this application may be applied to various communications systems, such as a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, and a cellular Internet of Things. The technical solutions provided in this application may be further applied to a future communications system, for example, a 6th generation mobile communications system.

The terminal device in embodiments of this application may also be referred to as user equipment (user equipment, UE), an access terminal, a subscriber unit, a subscriber station, a mobile, a mobile station (mobile station, MS), a mobile terminal (mobile Terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device, a vehicle-mounted device, a household appliance, a sensor, or an electronic tag that has a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. The terminal device in embodiments of this application may be a zero-power terminal.

The network device in embodiments of this application may be a device configured to communicate with the terminal device. If the terminal device is an electronic tag, the network device may be a reader/writer (for example, a reader/writer based on a radio frequency identification (radio frequency identification, RFID) technology) that is configured to read or write the electronic tag. The network device may alternatively be an access network device or a radio access network device. For example, the network device may be a base station. The network device in embodiments of this application may be a radio access network (radio access network, RAN) node (or device) that connects the terminal device to a wireless network. The base station may broadly cover various names in the following, or may be interchangeable with one of the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master MeNB, a secondary SeNB, a multi-standard radio (MSR) node, a home base station, a network controller, an access node, a radio node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or the apparatus described above. Alternatively, the base station may be a mobile switching center, a device that functions as a base station in device-to-device (device-to-device, D2D), vehicle-to-everything (vehicle-to-everything, V2X), or machine-to-machine (machine-to-machine, M2M) communication, a network-side device in a 6G network, a device that functions as a base station in a future communications system, or the like. The base station may support networks with a same access technology or different access technologies. A specific technology and a specific device form used by the network device are not limited in embodiments of this application.

The base station may be fixed or mobile. For example, a helicopter or an unmanned aerial vehicle may be configured to function as a mobile base station, and one or more cells may move according to a location of the mobile base station. In other examples, a helicopter or an unmanned aerial vehicle may be configured to function as a device that communicates with another base station.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of a communications device in this application may also be implemented by software functions running on hardware, or by virtualization functions instantiated on a platform (for example, a cloud platform).

For ease of understanding of backscatter communication, the following describes, with reference to FIG. 2, a terminal device that supports backscatter communication.

Generally, the terminal device 120 may include a power harvesting module 121 and a backscatter communications module 122. The power harvesting module 121 and the backscatter communications module 122 are described below with reference to FIG. 3 to FIG. 5. For brevity, details are not described herein again. In some cases, the terminal device 120 may further include a low-power calculation module 123. The low-power calculation module 123 is configured to provide a calculation function, such as data processing, for the terminal device 120. In some other cases, the terminal device 120 may further include a sensor 124 configured to collect external information (for example, an ambient temperature and ambient humidity). In some other cases, the terminal device 120 may further include a memory 125 configured to store some information (such as external information collected by using the foregoing sensor or an object identifier).

The power harvesting module 121 is configured to perform power harvesting. In some implementations, power may be harvested from a power supply signal transmitted by the network device. The power supply signal may be a "radio frequency signal" transmitted by the network device. Therefore, the power harvesting module is also referred to as a "radio frequency power harvesting module".

FIG. 3 shows a possible structure of a power harvesting module. As shown in FIG. 3, the power harvesting module 121 may harvest power of a spatial electromagnetic wave of a radio frequency signal based on an electromagnetic induction principle, and store harvested power in a capacitor C, which is a process of charging the capacitor C. After the process of charging the capacitor C is ended, the capacitor C may start to discharge, to supply power to the terminal device for operation. For example, the discharging of the capacitor C may be used to drive the terminal device to perform low-power demodulation on data transmitted by the network device. For another example, the discharging of the capacitor C may be used to drive the terminal to modulate data to be transmitted. For another example, the discharging of the capacitor C may be used to drive a sensor of the terminal device to collect data. For another example, the discharging of the capacitor C may be used to drive the terminal device to read data or the like in the memory 125.

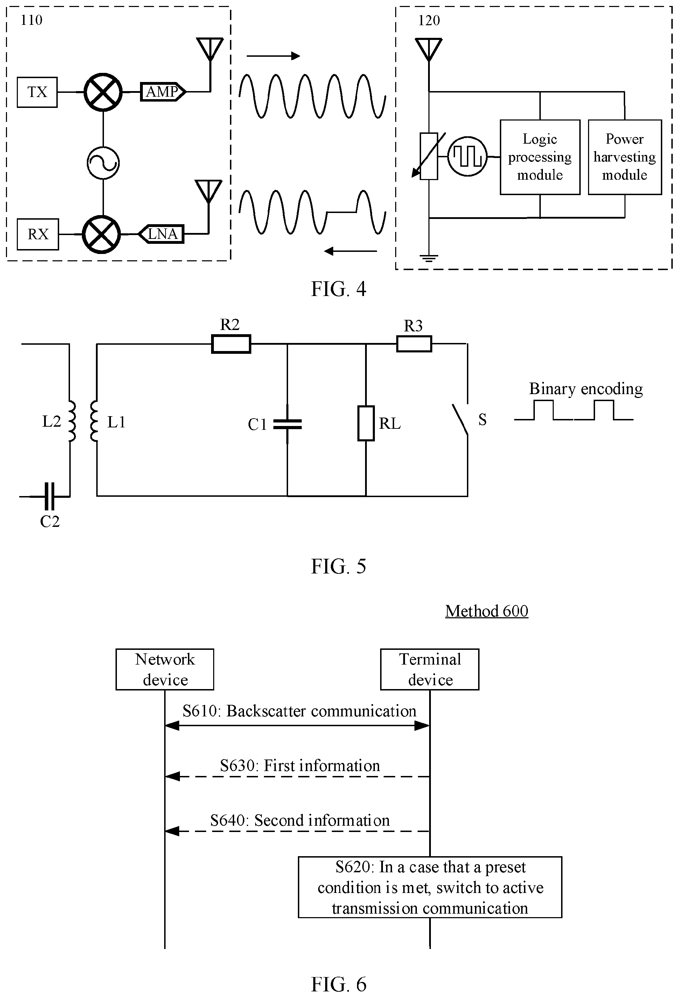

The backscatter communications module 122 is configured for the terminal device 120 to perform backscatter communication with the network device 110. The following describes the backscatter communication principle according to an embodiment of this application with reference to FIG. 4. With reference to FIG. 4, the terminal device 120 receives a radio signal transmitted by the network device 110, and modulates the radio signal to load data to be transmitted. Finally, the modulated signal is radiated from an antenna. This information transmission process is referred to as backscatter communication. The foregoing radio signal may also be referred to as a carrier signal. The carrier signal may be a radio signal that is not modulated. The carrier signal may be, for example, a sine wave signal. Backscatter communication and a load modulation function are inseparable. The load modulation function may be understood as that a circuit parameter of an oscillation loop of the terminal device is adjusted and controlled according to a beat of a data stream, such that parameters such as magnitude of impedance of the terminal device change accordingly, thereby completing a modulation process.

In some implementations, another component, for example, an amplifier (amplifier, AMP), may further be disposed on a transport (transport, TX) path of the network device 110, to process a signal to be transmitted. Another component, for example, a low noise amplifier (low noise amplifier, LNA), may further be disposed on a receive (receive, RX) path of the network device 110, to process a received signal.

In some other implementations, the terminal device 120 may include a power harvesting module, and the power harvesting module may be configured to harvest any signal in an environment. For example, the power harvesting module may be configured to harvest power from a power supply signal transmitted by a network device. A form of the power supply signal is not specifically limited in embodiments of this application. For example, the power supply signal may be a modulated radio signal, or may be an unmodulated radio signal. The carrier signal described above may also be used as the power supply signal. For another example, the power supply signal may alternatively be a radio signal of any waveform, such as a sine wave or a square wave.

Certainly, a logic processing module may be further disposed in the terminal device 120, to execute a corresponding calculation function.

It should be noted that, for both the network device 110 and the terminal device 120, FIG. 4 only shows examples of connection structures of signal processing circuits thereof, and processing circuits of the network device 110 and/or the terminal device 120 may include other elements. This is not specifically limited in embodiments of this application.

Generally, a load modulation function may be implemented in two manners: resistive load modulation and capacitive load modulation. FIG. 5 is a circuit diagram of a terminal device based on a resistive load modulation technology. It should be noted that the implementation of the load modulation technology by the circuit illustrated in FIG. 5 is similar to that of an existing circuit. For brevity, details of functions of resistors R2 and R3, capacitors C1 and C2, and inductors L1 and L2 included in the circuit in FIG. 5 are not described.

In the resistive load modulation, a resistor RL may be connected in parallel to a load. A switch S may control on/off of the resistor RL under control of a binary data stream. In this way, on/off of the resistor RL causes a change in a voltage of the circuit, and amplitude of a backscatter signal from the terminal device may be controlled by the change in the voltage of the circuit, to implement modulation of the backscatter signal, that is, implement amplitude-shift keying (amplitude-shift keying, ASK) modulation on the backscatter signal.

Similarly, in the capacitive load modulation, on/off of the capacitor may be controlled based on a binary data stream, to change a resonance frequency of a circuit, thereby changing an operating frequency of the backscatter signal. In this case, frequency-shift keying (frequency-shift keying, FSK) modulation is implemented.

As described above, the terminal device may perform information modulation on a received signal (namely, a carrier signal) through load modulation, to implement a backscatter communication process. Therefore, a terminal device in backscatter communication generally has the following advantages.

Advantage 1: Since the terminal device does not need to actively transmit a signal, the terminal device does not need a complex radio frequency path to be constructed. For example, a component such as a power amplifier (power amplifier, PA) or a radio frequency filter may not be disposed on the radio frequency path, which reduces costs and a volume of the terminal.

Advantage 2: Since the terminal device is not required to actively generate a high-frequency signal, there is no need for a high-frequency crystal oscillator, which reduces costs and a volume of the terminal device.

Advantage 3: Since the terminal device may communicate with the network device by using the backscatter technology, less power is consumed by the terminal device during communication, or even no power of the terminal device is consumed.

In addition to the backscatter communication, power harvesting, and load modulation functions described above, the terminal device may further have a coding function. In data transmitted by an encoding end (for example, a terminal device or an electronic tag), " 1" and "0" in the binary system may be represented by using different forms of code. In a zero-power communications system, a common coding manner may include: non-return-to-zero inverted (NRZ) encoding, Manchester (Manchester) encoding, unipolar return-to-zero (Unipolar RZ) encoding, differential bi-phase (DBP) encoding, Miller (Miller) encoding, differential encoding, or the like. Generally speaking, the encoding process is to represent bits 0 and 1 by using different pulse signals.

Based on the foregoing description of backscatter communication, it may be learned that a terminal device (for example, a zero-power terminal device) consumes little power of the terminal device for backscatter communication, and may even consume no power of the terminal device. Therefore, based on power sources and power use manners of terminal devices, zero-power terminal devices may be classified into three types: a passive zero-power terminal, a semi-passive zero-power terminal, and an active zero-power terminal.

### 1. Passive zero-power terminal

The passive zero-power terminal generally does not need a built-in battery. When the terminal device approaches a network device, the terminal device is located in a near field range formed by radiation of an antenna of the network device. In this case, the antenna of the terminal device may generate an induced current by electromagnetic induction, and the induced current may supply power to the terminal device, to implement demodulation of a received signal, and/or modulation, encoding, and the like of a to-be-transmitted signal. In some implementations, the passive zero-power terminal may be an electronic tag. Accordingly, the network device may be a reader/writer in a radio frequency identification (RFID) system, and is configured to read content in the electronic tag and/or is configured to change the content in the electronic tag.

### 2. Semi-passive zero-power terminal

No conventional battery is installed in the semi-passive zero-power terminal, but power of radio waves may be harvested by using the power harvesting module 121, and the harvested power may be stored in a power storage unit (for example, a capacitor). After obtaining the power, the power storage unit may supply power to the terminal device, to implement demodulation of a received signal, and/or modulation, encoding, and the like of a to-be-transmitted signal.

### 3. Active zero-power terminal

The active zero-power terminal may have a built-in battery. The battery may supply power to the terminal device, to implement demodulation of a received signal, and/or modulation, encoding, and the like of a to-be-transmitted signal. However, when the terminal device performs communication by using a backscatter technology, the terminal device does not need to consume power of the battery. Therefore, for this terminal device, "zero power" is mainly reflected in a scenario in which the terminal device performs communication by using the backscatter technology.

In some implementations, the active zero-power terminal may be an electronic tag, and the network device may be an RFID reader/writer. In this case, the built-in battery may supply power to an RFID chip in the terminal device, to increase a read/write distance between the RFID reader/writer and the electronic tag. In addition, the built-in battery may supply power to the RFID chip in the terminal device, to shorten a read/write delay of the RFID reader/writer for the electronic tag, thereby improving communication reliability.

The zero-power terminal in embodiments of this application has features such as low complexity, supporting environmental power supply, backscatter, and a new waveform. A name of the zero-power terminal in embodiments of this application does not constitute a limitation on a power source and a power use manner of the terminal, provided that power required for operation of the terminal mainly comes from an external environment. In this case, the terminal device may be a zero-power device or a low-power device. In some embodiments, the zero-power terminal may also be referred to as an environment power-supplying terminal, a power harvesting-based terminal, or the like.

Based on the foregoing description, it may be learned that power consumption of the terminal device (for example, the zero-power terminal device) when performing the backscatter communication is extremely low (even reaching zero power consumption). However, backscatter communication has a smaller coverage and poorer communication performance than conventional active transmission communication. It should be noted that backscatter communication indicates that the terminal device may perform backscatter transmission based on a received signal. For specific description, refer to the description in the foregoing embodiments. Active transmission communication indicates that the terminal device may actively transmit a radio signal based on a conventional transmitter (which is different from a transmitter of the zero-power terminal) without performing backscatter transmission based on the received signal.

With continuous development of communications technologies, a terminal device that supports dual-mode transmission (which may be referred to as a dual-mode terminal for short) is introduced into some communications systems. To be specific, the terminal device supports backscatter communication and active transmission communication. In this way, the dual-mode terminal has lower overall power consumption and supports a longer working time than an existing conventional terminal device that can only adopt an active transmission communication manner. Compared with the terminal device (such as the zero-power terminal) that supports only a backscatter communication manner, the dual-mode terminal supporting the active transmission communication manner can greatly extend a communication distance. However, it is not known how the terminal device supporting dual-mode transmission performs communication.

To solve one or more of the foregoing technical problems, this application provides a communication method and a communications apparatus. With reference to FIG. 6 to FIG. 8, the following describes embodiments of this application in detail by using examples.

FIG. 6 is a schematic flowchart of a communication method according to an embodiment of this application. The method 600 shown in FIG. 6 may include steps S610 and S620, which are specifically as follows.

S610: A terminal device performs backscatter communication.

The terminal device may be a dual-mode terminal. To be specific, the terminal device may support backscatter communication and active transmission communication. For example, the terminal device may include a structure of the zero-power terminal similar to the foregoing embodiment, or may include a conventional transmitter that can actively transmit a radio signal. Alternatively, a transmitter of the terminal device supports both backscatter transmission and active transmission.

In some embodiments, the terminal device may have various features.

For example, the terminal device may be a passive terminal, a semi-passive terminal, or an active terminal.

For another example, the terminal device may be a terminal that has a power storage capability or a terminal that has no power storage capability.

For another example, a low noise amplifier (low noise amplifier, LNA) may be disposed on a receive path of the terminal device. When backscatter communication is performed, the LNA may be used for processing a received signal. Alternatively, no LNA is disposed on a receive path of the terminal device.

In embodiments of this application, the terminal device first performs backscatter communication, which can reduce power consumption of the terminal device.

In some embodiments, the backscatter communication may include one or more backscatter transmissions. Optionally, in a case that backscatter communication includes a plurality of backscatter transmissions, time domain resources used for the plurality of backscatter transmissions may be consecutive or discrete in time domain.

The backscatter communication may include one backscatter initial transmission (namely, an initial transmission based on a backscatter manner), and/or one or more backscatter retransmissions (namely, retransmission based on the backscatter manner). For example, the terminal device may perform backscatter initial transmission, but a network device fails to receive the signal. In this case, the terminal device may continue to perform backscatter retransmission.

Optionally, the plurality of backscatter transmissions may include a first backscatter transmission and a second backscatter transmission, and the first backscatter transmission and the second backscatter transmission may be two adjacent backscatter transmissions.

Optionally, the first backscatter transmission and the second backscatter transmission may be spaced by at least a second time interval. For example, if no acknowledgment information of the network device is received in the second time interval after the first backscatter transmission, the terminal device may perform the second backscatter transmission.

A unit of the second time interval may be any one of the following: a minute (min), a second (s), a millisecond (ms), a symbol, a slot, a frame, or a subframe.

A start time domain position of the second backscatter transmission may be any one of the following: a position later than the first backscatter transmission by the second time interval, a position later than the first backscatter transmission by the second time interval plus a preset offset, the 1^{st} time unit that is available for the backscatter communication among time units later than the first backscatter transmission by at least the second time interval, or the 1^{st} time unit available for the backscatter communication among time units later than the first backscatter transmission by at least the second time interval plus the preset offset. The second time interval may be configured by the network device, specified in a protocol, or determined by the terminal device. Optionally, the preset offset may also be specified in a protocol, configured by a network, or scheduled by a network.

However, because of characteristics (for example, a small coverage and a low signal power) of the backscatter communication, as the dual-mode terminal continuously performs backscatter retransmission, there may be a case that a delay is continuously increased but transmission is still not successful. For example, a relatively typical case is that the terminal device is far away from the network device. In this case, when a backscatter signal arrives at the network device, a signal strength is relatively low, and consequently, the network device cannot correctly receive the signal. Even if the terminal device performs a plurality of backscatter retransmissions, the network device may still be unable to correctly receive the signal, and only the delay is increased. At this time, the terminal device may switch to the active transmission communication.

In some embodiments, the terminal device may operates in a first communication mode. The terminal device operating in the first communication mode is allowed to switch from the backscatter communication to the active transmission communication. For example, the first communication mode may indicate that the terminal device is allowed to switch from the backscatter communication to the active transmission communication in a case that a preset condition is met. Switching from the backscatter communication to the active transmission communication may also be referred to as fallback (fallback) from the backscatter communication to the active transmission communication. Therefore, the first communication mode may also indicate that the terminal device supports backscatter communication fallback (a backscatter fallback mechanism).

The first communication mode may be scheduled by the network device. For example, the first communication mode may be scheduled by the network device via any one of the following configuration information: dynamic configuration information, semi-static configuration information, configured grant (configured grant) configuration information, or the like. Optionally, the configuration information may indicate that the terminal device operates in the first communication mode.

Certainly, the network device may alternatively schedule the terminal device via the configuration information to perform the backscatter communication (cannot perform the active transmission communication) or the active transmission communication (cannot perform the backscatter communication). Correspondingly, the terminal device can only perform the backscatter communication or the active transmission communication.

The first communication mode may alternatively be actively initiated by the terminal device. For example, when the terminal device performs measurement reporting, random access, initial access, system information (system information, SI) requesting, or the like, the terminal device operates in the first communication mode.

S620: In a case that the preset condition is met, the terminal device switches to the active transmission communication.

In some embodiments, a frequency domain resource used for the backscatter communication may be associated with a frequency domain resource used for the active transmission communication.

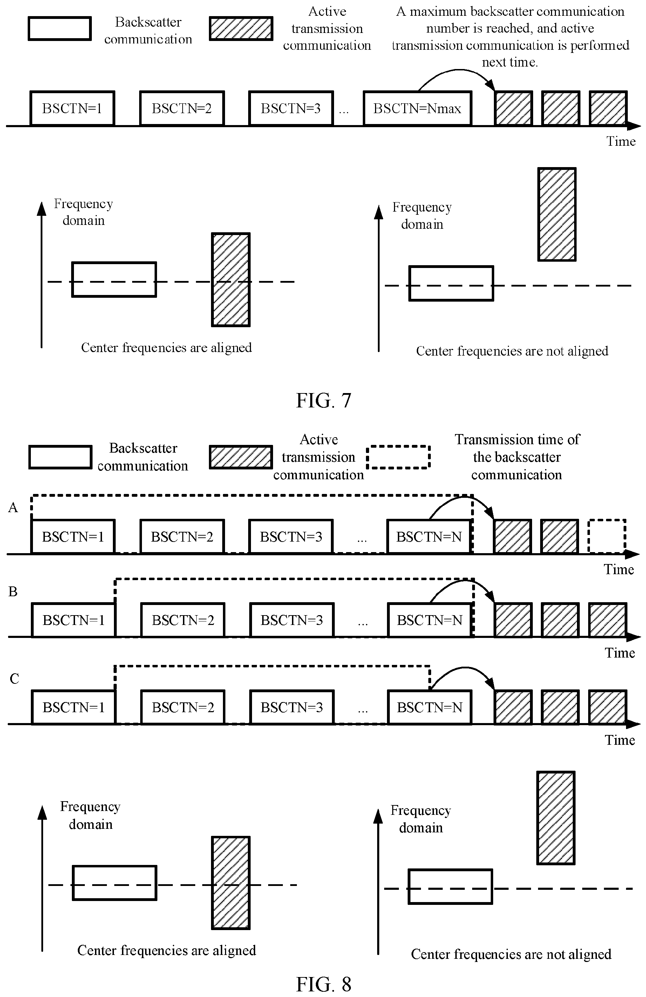

Optionally, a center frequency of the frequency domain resource used for the backscatter communication may be aligned or not aligned with a center frequency of the frequency domain resource used for the active transmission communication. For example, as shown in a lower part in FIG. 7 or a lower part in FIG. 8, the center frequency of the frequency domain resource used for the backscatter communication may be aligned with the center frequency of the frequency domain resource used for the active transmission communication, or the center frequency of the frequency domain resource used for the backscatter communication may not be aligned with the center frequency of the frequency domain resource used for the active transmission communication.

Optionally, a preset offset exists between the frequency domain resource used for the backscatter communication and the frequency domain resource used for the active transmission communication. For example, the frequency domain resource used for the backscatter communication may be deviated from the frequency domain resource used for the active transmission communication by a preset offset. The terminal device may determine, based on the frequency domain resource used for the backscatter communication and the preset offset, the frequency domain resource used for the active transmission communication. Certainly, the terminal device may alternatively determine, based on the frequency domain resource used for the active transmission communication and the preset offset, the frequency domain resource used for the backscatter communication. The preset offset may be configured by the network device, or may be specified in a protocol.

In some embodiments, the preset condition may include: a transmission number of the backscatter communication (backscatter communication transmission number, BSCTN) is greater than or equal to a maximum backscatter communication number.

Optionally, the terminal device may perform the backscatter communication first. In a case that the transmission number of the backscatter communication is greater than or equal to the maximum backscatter communication number, the terminal device may switch to the active transmission communication, and perform the active transmission communication at a next data transmission. For example, as shown in an upper part in FIG. 7, it is assumed that the maximum backscatter communication number is Nmax. When the BSCTN is equal to Nmax, the terminal device may switch to the active transmission communication, where Nmax is a positive integer.

The backscatter communication may include one backscatter initial transmission and/or one or more backscatter retransmissions, and the transmission number of the backscatter communication may include an initial transmission number and/or a retransmission number of the backscatter communication. For example, the transmission number of the backscatter communication may be a total transmission number (the initial transmission number plus the retransmission number) of the backscatter communication, or may be the retransmission number in the backscatter communication.

In some embodiments, before S620 is performed, the terminal device may count the transmission number of the backscatter communication by using a first counter. In this case, the preset condition may include the following: a value of the first counter is greater than or equal to the maximum backscatter communication number.

In some embodiments, the transmission number of the backscatter communication is an actual transmission number of the backscatter communication. Optionally, the value of the first counter may be the actual transmission number. It should be noted that the actual transmission number herein may be a number of transmissions (namely, backscatter) that are actually performed. The number is counted for each transmission. For example, the value of the first counter may be incremented by 1 for each time of performing the transmission (namely, backscatter).

Optionally, the value of the first counter is related to an initial value of the first counter and the preset condition. For example, if the preset condition is that the BSCTN is equal to the maximum backscatter communication number and the initial value of the first counter is 0 (or may be 1 or another value), when the value of the first counter is Nmax-1, it may be considered that the value of the first counter is equal to the maximum backscatter communication number. If the preset condition is that the BSCTN is equal to the maximum backscatter communication number and the initial value of the first counter is 1, when the value of the first counter is Nmax, it may be considered that the value of the first counter is equal to the maximum backscatter communication number.

In some embodiments, the transmission number of the backscatter communication may include an initial transmission number and/or a retransmission number of the backscatter communication.

For example, the transmission number of the backscatter communication may include an initial transmission number and/or a retransmission number of the backscatter communication. In this case, the initial transmission of the backscatter communication may include M repetitions (repetition), each retransmission of the backscatter communication may also include M repetitions, and the value of the first counter may be a result of a ceiling operation performed on a number obtained by dividing, by M, a total number of repetitions in the initial transmission and the retransmissions of the backscatter communication, where M is a positive integer. It is assumed that the maximum backscatter communication number is Nmax (in this case, it may be considered that Nmax indicates a maximum number of initial transmissions and retransmissions), and the preset condition is that the BSCTN is equal to the maximum backscatter communication number. In this case, when the preset condition is met, the terminal device performs one initial transmission and (Nmax-1) retransmissions. Because both the initial transmission and each retransmission include the M repetitions, the terminal device actually performs Nmax*M backscatter transmissions. Correspondingly, when the first counter is updated, the value of the first counter may be a result of a ceiling operation performed on a number obtained by dividing, by M, a total number of repetitions in the initial transmission and the retransmissions of the backscatter communication.

For another example, the transmission number of the backscatter communication may include a retransmission number of the backscatter communication. In this case, each retransmission of the backscatter communication may also include M repetitions, and the value of the first counter may be a result of a ceiling operation performed on a number obtained by dividing, by M, a total number of repetitions in the retransmissions of the backscatter communication. It is assumed that the maximum backscatter communication number is Nmax (in this case, it may be considered that Nmax indicates a maximum number of retransmissions), and the preset condition is that the BSCTN is equal to the maximum backscatter communication number. In this case, when the preset condition is met, the terminal device performs one initial transmission and Nmax retransmissions. Because each retransmission includes the M repetitions, the terminal device actually performs (Nmax+1)*M backscatter transmissions. Correspondingly, when the first counter is updated, the value of the first counter may be a result of a ceiling operation performed on a number obtained by dividing, by M, a total number of repetitions in the retransmissions of the backscatter communication.

In some embodiments, in a case that the terminal device switches to active transmission communication, the terminal device may count a transmission number of the active transmission communication by using a second counter. In other words, the terminal device may separately count the transmission number of the backscatter communication and the transmission number of the active transmission communication by using two different counters.

Optionally, the terminal device may initialize the first counter when the preset condition is met, or the terminal device may initialize the first counter when the first counter is used next time.

The terminal device may determine (or adjust) a transmit power of the active transmission communication based on a value of the second counter. For example, the active transmission communication may include a plurality of active transmissions. The terminal device may continuously reduce the transmit power of the active transmission communication based on the value of the second counter, or the terminal device may continuously increase the transmit power of the active transmission communication based on the value of the second counter.

In some embodiments, in a case that the terminal device switches to active transmission communication, the terminal device counts a transmission number of the active transmission communication by using the first counter. In other words, the terminal device may count the transmission number of the backscatter communication and the transmission number of the active transmission communication by using one counter.

Optionally, the terminal device may not initialize the first counter when the preset condition is met, and continue to increment the value of the first counter by 1 each time the active transmission is performed.

The terminal device may determine a transmit power of the active transmission communication based on the value of the first counter.

In some embodiments, the maximum backscatter communication number may be indicated by the network device, specified in the protocol, or determined by the terminal device.

The maximum backscatter communication number may be indicated by the network device via dynamic configuration information or indicated by the network device via semi-static configuration information. The dynamic configuration information may be scheduling information used to schedule the backscatter communication or the first communication mode by the network device.

Optionally, the dynamic configuration information or the semi-static configuration information may include at least one of the following: a backscatter communication number, a configuration index of the backscatter communication number, or a communication model configured by the network device. The communication model may be one of a plurality of communication models, and each of the plurality of communication models may correspond to a respective backscatter communication number. For example, the network device configures three communication models for the terminal device, which are respectively a type 1 model, a type 2 model, and a type 3 model. Each of the three communication models may correspond to a respective maximum backscatter communication number. At this time, the network device may indicate the communication model to the terminal device via the configuration information, so that the terminal device can determine the maximum backscatter communication number.

In some embodiments, before S620 is performed, the method 600 may further include step S630.

S630: The terminal device transmits first information to the network device.

The first information may be used by the network device to determine the maximum backscatter communication number.

Optionally, the first information may include the maximum backscatter communication number expected by the terminal device and/or a power storage capability of the terminal device.

The maximum backscatter communication number may alternatively be a backscatter communication number specified in the protocol.

The maximum backscatter communication number may alternatively be determined by the terminal device based on a service type and/or a delay requirement. Optionally, the maximum backscatter communication number may be determined by the terminal device from a plurality of preset backscatter number candidate values. For example, the plurality of candidate values for the backscatter number may be specified in the protocol in advance, and the terminal device may determine the maximum backscatter communication number from the plurality of candidate values for the backscatter number based on the service type and the delay requirement.

A start time domain position of the active transmission communication may be any one of the following:
a position later than the last backscatter transmission in the backscatter communication by a first time interval, or the 1^{st} time unit available for the active transmission communication among time units later than the last backscatter transmission by at least the first time interval. For example, the active transmission communication may include a plurality of active transmissions. The terminal device may continuously reduce the transmit power of the active transmission communication based on the value of the first counter, or the terminal device may continuously increase the transmit power of the active transmission communication based on the value of the first counter. Optionally, the first time interval may be configured by the network device, specified in the protocol, or determined by the terminal device.

In some embodiments, the preset condition may include the following: a transmission time of the backscatter communication is greater than or equal to a maximum backscatter communication time.

Optionally, the terminal device may perform the backscatter communication first. In a case that the transmission time of the backscatter communication is greater than or equal to the maximum backscatter communication time, the terminal device may switch to the active transmission communication, and perform the active transmission communication for a next data transmission. For example, as shown in an upper part in FIG. 8, it is assumed that the maximum backscatter communication time is Tmax. When the transmission time of the backscatter communication is equal to Tmax, the terminal device may switch to the active transmission communication, where Tmax is a positive number.

Optionally, a unit of the maximum backscatter communication time may be any one of the following: a minute, a second, a millisecond, a symbol, a slot, a frame, or a subframe.

A start moment of the transmission time of the backscatter communication may be any one of the following:
a start position of the 1^{st} backscatter transmission in the backscatter communication, an end position of the 1^{st} backscatter transmission, a start point or an end point of a time unit in which the start position of the 1^{st} backscatter transmission is located, a start point or an end point of a time unit in which the end position of the 1^{st} backscatter transmission is located, an end position of scheduling information of the backscatter communication, a start point or an end point of a time unit in which the scheduling information is located, a position behind the end position of the scheduling information by a preset offset, or a position indicated by the scheduling information.

For example, as shown in a part A in FIG. 8, the start moment of the transmission time of the backscatter communication may be the start position of the 1^{st} backscatter transmission (BSCTN=1); or as shown in parts B and C in FIG. 8, the start moment of the transmission time of the backscatter communication may be the end position of the 1^{st} backscatter transmission (BSCTN=1).

The start position of the 1^{st} backscatter transmission may be any one of the following:
an end position of scheduling information, a start point or an end point of a time unit in which the scheduling information is located, a position behind the end position of the scheduling information by a preset offset, or a position indicated by the scheduling information.

Optionally, as shown in the part C in FIG. 8, a start position of the last backscatter transmission in the backscatter communication may be before an end moment of the transmission time of the backscatter communication; or as shown in the parts A and B in FIG. 8, an end position of the last backscatter transmission in the backscatter communication may be before the end moment of the transmission time of the backscatter communication, or at an end moment of the transmission time of the backscatter communication.

In some embodiments, the maximum backscatter communication time may be indicated by the network device, specified in the protocol, or determined by the terminal device.

The maximum backscatter communication time may be indicated by the network device via dynamic configuration information or indicated by the network device via semi-static configuration information. The dynamic configuration information may be scheduling information used to schedule the backscatter communication or the first communication mode by the network device.

Optionally, the dynamic configuration information or the semi-static configuration information may include: a backscatter communication time, a configuration index of the backscatter communication time, or a communication model configured by the network device. The communication model is one of a plurality of communication models, and each of the plurality of communication models corresponds to a respective backscatter communication time. For example, the network device configures three communication models for the terminal device, which are respectively a type 1 model, a type 2 model, and a type 3 model. Each of the three communication models may correspond to a respective maximum backscatter communication time. At this time, the network device may indicate the communication model to the terminal device via the configuration information, so that the terminal device can determine the maximum backscatter communication time.

In some embodiments, before S620 is performed, the method 600 may further include step S640.

S640: The terminal device transmits second information to the network device.

The second information may be used by the network device to determine the maximum backscatter communication time.

Optionally, the second information may include the maximum backscatter communication time expected by the terminal device and/or a power storage capability of the terminal device.

The maximum backscatter communication time may alternatively be a backscatter communication time specified in the protocol.

The maximum backscatter communication time may alternatively be determined by the terminal device based on a service type and/or a delay requirement. Optionally, the maximum backscatter communication time may be determined by the terminal device from a plurality of preset backscatter time candidate values. For example, the plurality of candidate values for the backscatter time may be specified in the protocol in advance, and the terminal device may determine the maximum backscatter communication time from the plurality of candidate values for the backscatter time based on the service type and the delay requirement.

A start time domain position of the active transmission communication may be any one of the following:
a position later than the last backscatter transmission in the backscatter communication by a first time interval, or the 1^{st} time unit available for the active transmission communication among time units later than the last backscatter transmission by at least the first time interval, an end moment of the transmission time of the backscatter communication, a position later than the end moment of the transmission time of the backscatter communication by the first time interval, or the 1^{st} time unit available for the active transmission communication among time units later than the end moment of the transmission time of the backscatter communication by at least the first time interval. Optionally, the first time interval may be configured by the network device, specified in the protocol, or determined by the terminal device.

In embodiments of this application, the terminal device performs the backscatter communication, so that power consumption of the terminal device can be reduced. In a case that the preset condition is met, the terminal device switches to the active transmission communication. This can avoid a case that the backscatter communication is continuously performed but transmission continuously fails, increase a success rate of data transmission, and reduce a transmission delay. Therefore, according to a method in embodiments of this application, power consumption of the terminal device can be reduced while ensuring a short transmission delay.

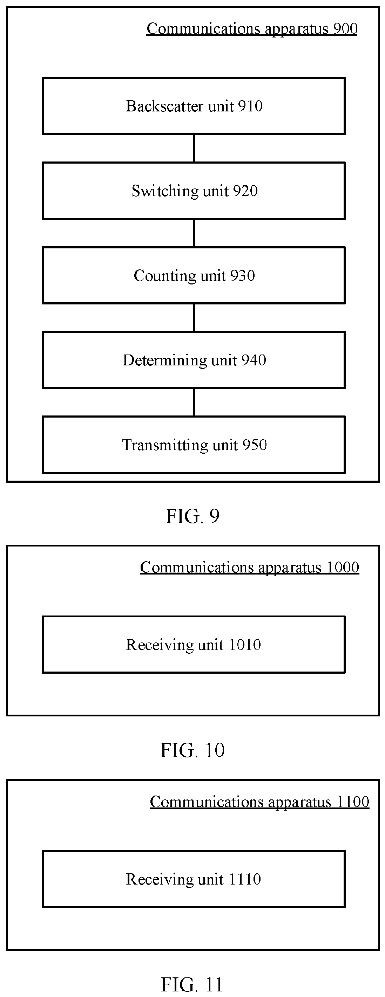

The foregoing describes in detail the method embodiments of this application with reference to FIG. 1 to FIG. 8. The following describes in detail apparatus embodiments of this application with reference to FIG. 9 to FIG. 12. It should be understood that the description of the method embodiments corresponds to the description of the apparatus embodiments, and therefore, for parts that are not described in detail, reference may be made to the foregoing method embodiments.

FIG. 9 is a schematic structural diagram of a communications apparatus according to an embodiment of this application. As shown in FIG. 9, the apparatus 900 includes a backscatter unit 910 and a switching unit 920, which are specifically as follows.

The backscatter unit 910 is configured to perform backscatter communication.

The switching unit 920 is configured to: in a case that a preset condition is met, switch to active transmission communication.

Optionally, the preset condition includes: a transmission number of the backscatter communication is greater than or equal to a maximum backscatter communication number, or a transmission time of the backscatter communication is greater than or equal to a maximum backscatter communication time.

Optionally, the apparatus 900 further includes a counting unit 930, configured to count the transmission number of the backscatter communication by using a first counter. The preset condition includes the following: a value of the first counter is greater than or equal to the maximum backscatter communication number.

Optionally, the transmission number of the backscatter communication is an actual transmission number of the backscatter communication.

Optionally, the value of the first counter is the actual transmission number.

Optionally, the transmission number of the backscatter communication includes an initial transmission number and/or a retransmission number of the backscatter communication.

Optionally, an initial transmission of the backscatter communication includes M repetitions and/or each retransmission of the backscatter communication includes M repetitions, and the value of the first counter is a result of a ceiling operation performed on a number obtained by dividing, by M, a total number of repetitions in the initial transmission and/or retransmissions of the backscatter communication, where M is a positive integer.

Optionally, the counting unit 930 is further configured to: in a case of switching to the active transmission communication, count a transmission number of the active transmission communication by using a second counter.

Optionally, the apparatus 900 further includes a determining unit 940, configured to determine a transmit power of the active transmission communication based on a value of the second counter.

Optionally, the counting unit 930 is further configured to: in a case of switching to the active transmission communication, count a transmission number of the active transmission communication by using the first counter.

Optionally, the apparatus 900 further includes a determining unit 940, configured to determine a transmit power of the active transmission communication based on the value of the first counter.

Optionally, the maximum backscatter communication number is indicated by a network device, specified in a protocol, or determined by the apparatus.

Optionally, the maximum backscatter communication number is indicated by the network device via dynamic configuration information or indicated by the network device via semi-static configuration information.

Optionally, the dynamic configuration information is scheduling information used to schedule the backscatter communication by the network device.

Optionally, the dynamic configuration information or the semi-static configuration information includes at least one of the following: a backscatter communication number, a configuration index of the backscatter communication number, or a communication model configured by the network device, where the communication model is one of a plurality of communication models, and each of the plurality of communication models corresponds to a respective backscatter communication number.

Optionally, the apparatus 900 further includes a transmitting unit 950, configured to transmit first information to a network device, where the first information is used by the network device to determine the maximum backscatter communication number.

Optionally, the first information includes the maximum backscatter communication number expected by the apparatus and/or a power storage capability of the apparatus.

Optionally, the maximum backscatter communication number is a backscatter communication number specified in the protocol.

Optionally, the maximum backscatter communication number is determined by the apparatus based on a service type and/or a delay requirement.

Optionally, the maximum backscatter communication number is determined by the apparatus from a plurality of preset backscatter number candidate values.

Optionally, a start moment of the transmission time of the backscatter communication is any one of the following:
a start position of the 1^{st} backscatter transmission in the backscatter communication, an end position of the 1^{st} backscatter transmission, a start point or an end point of a time unit in which the start position of the 1^{st} backscatter transmission is located, a start point or an end point of a time unit in which the end position of the 1^{st} backscatter transmission is located, an end position of scheduling information of the backscatter communication, a start point or an end point of a time unit in which the scheduling information is located, a position behind the end position of the scheduling information by a preset offset, or a position indicated by the scheduling information.

Optionally, a start position of the last backscatter transmission in the backscatter communication is before an end moment of the transmission time of the backscatter communication, or an end position of the last backscatter transmission in the backscatter communication is before the end moment of the transmission time of the backscatter communication.

Optionally, a unit of the maximum backscatter communication time is any one of the following: a minute, a second, a millisecond, a symbol, a slot, a frame, or a subframe.

Optionally, the maximum backscatter communication time is indicated by the network device, specified in the protocol, or determined by the apparatus.

Optionally, the maximum backscatter communication time is indicated by the network device via dynamic configuration information or indicated by the network device via semi-static configuration information.

Optionally, the dynamic configuration information is scheduling information used to schedule the backscatter communication by the network device .

Optionally, the dynamic configuration information or the semi-static configuration information includes at least one of the following: a backscatter communication time, a configuration index of the backscatter communication time, or a communication model configured by the network device, where the communication model is one of a plurality of communication models, and each of the plurality of communication models corresponds to a respective backscatter communication time.

Optionally, the apparatus 900 further includes a transmitting unit 950, configured to transmit second information to the network device, where the second information is used by the network device to determine the maximum backscatter communication time.

Optionally, the second information includes the maximum backscatter communication time expected by the apparatus and/or a power storage capability of the apparatus.

Optionally, the maximum backscatter communication time is a backscatter communication time specified in the protocol.

Optionally, the maximum backscatter communication time is determined by the apparatus based on a service type and/or a delay requirement.

Optionally, the maximum backscatter communication time is determined by the apparatus from a plurality of preset backscatter time candidate values.

Optionally, a start time domain position of the active transmission communication is any one of the following: a position later than the last backscatter transmission in the backscatter communication by a first time interval, or the 1^{st} time unit available for the active transmission communication among time units later than the last backscatter transmission by at least the first time interval.

Optionally, a start time domain position of the active transmission communication is any one of the following: a position later than the last backscatter transmission in the backscatter communication by a first time interval, or the 1^{st} time unit available for the active transmission communication among time units later than the last backscatter transmission by at least the first time interval, an end moment of the transmission time of the backscatter communication, a position later than the end moment of the transmission time of the backscatter communication by the first time interval, or the 1^{st} time unit available for the active transmission communication among time units later than the end moment of the transmission time of the backscatter communication by at least the first time interval.

Optionally, the apparatus operates in a first communication mode, the first communication mode is scheduled by a network device or actively initiated by the apparatus, and the apparatus operating in the first communication mode is allowed to switch from the backscatter communication to the active transmission communication in a case that the preset condition is met.

Optionally, the first communication mode is scheduled by the network device via any one of the following configuration information: dynamic configuration information, semi-static configuration information, or configured grant configuration information.

Optionally, the configuration information indicates that the apparatus operates in the first communication mode.

Optionally, a frequency domain resource used for the backscatter communication is associated with a frequency domain resource used for the active transmission communication.

Optionally, a center frequency of the frequency domain resource used for the backscatter communication is aligned with a center frequency of the frequency domain resource used for the active transmission communication, or a preset offset exists between the frequency domain resource used for the backscatter communication and the frequency domain resource used for the active transmission communication.

Optionally, the backscatter communication includes a plurality of backscatter transmissions, and time domain resources used for the plurality of backscatter transmissions are consecutive or discrete in time domain.

Optionally, the backscatter communication includes a plurality of backscatter transmissions, a first backscatter transmission and a second backscatter transmission are two adjacent backscatter transmissions in the plurality of backscatter transmissions, and the backscatter unit 910 is further configured to: if no acknowledgment information from a network device is received in a second time interval after the first backscatter transmission, perform the second backscatter transmission.

Optionally, a unit of the second time interval is any one of the following: a minute, a second, a millisecond, a symbol, a slot, a frame, or a subframe.

Optionally, a start time domain position of the second backscatter transmission is any one of the following: a position later than the first backscatter transmission by the second time interval, a position later than the first backscatter transmission by the second time interval plus a preset offset, the 1^{st} time unit available for the backscatter communication among time units later than the first backscatter transmission by at least the second time interval, or the 1^{st} time unit available for the backscatter communication among time units later than the first backscatter transmission by at least the second time interval plus the preset offset.

FIG. 10 is a schematic structural diagram of a communications apparatus according to another embodiment of this application. The communications apparatus 1000 in FIG. 10 includes a receiving unit 1010, which is specifically as follows.

The receiving unit 1010 is configured to receive first information transmitted by a terminal device, where the first information is used by the apparatus to determine a maximum backscatter communication number.

Optionally, the first information includes the maximum backscatter communication number expected by the terminal device and/or a power storage capability of the terminal device.

FIG. 11 is a schematic structural diagram of a communications apparatus according to still another embodiment of this application. The communications apparatus 1100 in FIG. 11 includes a receiving unit 1110, which is specifically as follows.

The receiving unit 1110 is configured to receive second information transmitted by a terminal device, where the second information is used by the apparatus to determine a maximum backscatter communication time.

Optionally, the second information includes the maximum backscatter communication time expected by the terminal device and/or a power storage capability of the terminal device.

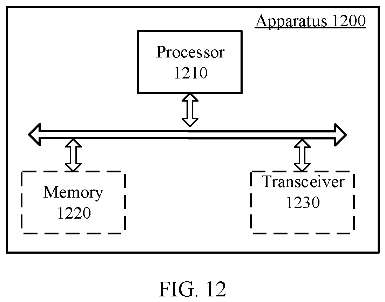

FIG. 12 is a schematic structural diagram of an apparatus according to an embodiment of this application. The dashed lines in FIG. 12 indicate that the unit or module is optional. The apparatus 1200 may be configured to implement the method described in the foregoing method embodiments. The apparatus 1200 may be a chip or a communications apparatus.

The apparatus 1200 may include one or more processors 1210. The processor 1210 may allow the apparatus 1200 to implement the method described in the foregoing method embodiments. The processor 1210 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, or the processor may be any conventional processor or the like.

The apparatus 1200 may further include one or more memories 1220. The memory 1220 stores a program that may be executed by the processor 1210 to cause the processor 1210 to perform the method described in the foregoing method embodiments. The memory 1220 may be independent of the processor 1210 or may be integrated into the processor 1210.

The apparatus 1200 may further include a transceiver 1230. The processor 1210 may communicate with another device or chip through a transceiver 1230. For example, the processor 1210 may transmit data to and receive data from the another device or chip through the transceiver 1230.

An embodiment of this application further provides a computer-readable storage medium for storing a program. The computer-readable storage medium may be applied to the communications apparatus provided in embodiments of this application, and the program causes a computer to perform the method executed by the communications apparatus in various embodiments of this application.

An embodiment of this application further provides a computer program product. The computer program product includes a program. The computer program product may be applied to the communications apparatus provided in embodiments of this application, and the program causes a computer to perform the method executed by the communications apparatus in various embodiments of this application.

An embodiment of this application further provides a computer program. The computer program may be applied to the communications apparatus provided in embodiments of this application, and the computer program causes a computer to perform the method executed by the communications apparatus in various embodiments of this application.

It should be understood that, in embodiments of this application, "B that is corresponding to A" means that B is associated with A, and B may be determined based on A. However, it should also be understood that, determining B based on A does not mean determining B based only on A, but instead B may be determined based on A and/or other information.

It should be understood that, in this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

It should be understood that, in embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that, the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communications connections may be implemented as indirect couplings or communications connections through some interfaces, apparatuses or units, and may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objective of the solutions of the embodiments.

In addition, function units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
performing, by a terminal device, backscatter communication; and
in a case that a preset condition is met, switching, by the terminal device, to active transmission communication.

2. The method according to claim 1, wherein the preset condition comprises: a transmission number of the backscatter communication is greater than or equal to a maximum backscatter communication number, or a transmission time of the backscatter communication is greater than or equal to a maximum backscatter communication time.

3. The method according to claim 2, wherein the method further comprises:
counting, by the terminal device, the transmission number of the backscatter communication by using a first counter, wherein
the preset condition comprises: a value of the first counter is greater than or equal to the maximum backscatter communication number.

4. The method according to claim 3, wherein the transmission number of the backscatter communication is an actual transmission number of the backscatter communication.

5. The method according to claim 4, wherein the value of the first counter is the actual transmission number.

6. The method according to claim 3, wherein the transmission number of the backscatter communication comprises an initial transmission number and/or a retransmission number of the backscatter communication.

7. The method according to claim 6, wherein an initial transmission of the backscatter communication comprises M repetitions and/or each retransmission of the backscatter communication comprises M repetitions, and the value of the first counter is a result of a ceiling operation performed on a number obtained by dividing, by M, a total number of repetitions in the initial transmission and/or retransmissions of the backscatter communication, wherein M is a positive integer.

8. The method according to any one of claims 4 to 7, wherein the method further comprises:
in a case that the terminal device switches to the active transmission communication, counting, by the terminal device, a transmission number of the active transmission communication by using a second counter.

9. The method according to claim 8, wherein the method further comprises:
determining, by the terminal device, a transmit power of the active transmission communication based on a value of the second counter.

10. The method according to any one of claims 4 to 7, wherein the method further comprises:
in a case that the terminal device switches to the active transmission communication, counting, by the terminal device, a transmission number of the active transmission communication by using the first counter.

11. The method according to claim 10, wherein the method further comprises:
determining, by the terminal device, a transmit power of the active transmission communication based on the value of the first counter.

12. The method according to any one of claims 2 to 11, wherein the maximum backscatter communication number is indicated by a network device, specified in a protocol, or determined by the terminal device.

13. The method according to claim 12, wherein the maximum backscatter communication number is indicated by the network device via dynamic configuration information or indicated by the network device via semi-static configuration information.

14. The method according to claim 13, wherein the dynamic configuration information is scheduling information used to schedule the backscatter communication by the network device .

15. The method according to claim 13 or 14, wherein the dynamic configuration information or the semi-static configuration information comprises at least one of: a backscatter communication number, a configuration index of the backscatter communication number, or a communication model configured by the network device, wherein the communication model is one of a plurality of communication models, and each of the plurality of communication models corresponds to a respective backscatter communication number.

16. The method according to any one of claims 2 to 15, wherein the method further comprises:
transmitting, by the terminal device, first information to the network device, wherein the first information is used by the network device to determine the maximum backscatter communication number.

17. The method according to claim 16, wherein the first information comprises the maximum backscatter communication number expected by the terminal device and/or a power storage capability of the terminal device.

18. The method according to claim 12, wherein the maximum backscatter communication number is a backscatter communication number specified in the protocol.

19. The method according to claim 12, wherein the maximum backscatter communication number is determined by the terminal device based on a service type and/or a delay requirement.

20. The method according to claim 12, wherein the maximum backscatter communication number is determined by the terminal device from a plurality of preset backscatter number candidate values.

21. The method according to claim 2, wherein a start moment of the transmission time of the backscatter communication is any one of:
a start position of the 1^{st} backscatter transmission in the backscatter communication, an end position of the 1^{st} backscatter transmission, a start point or an end point of a time unit in which the start position of the 1^{st} backscatter transmission is located, a start point or an end point of a time unit in which the end position of the 1^{st} backscatter transmission is located, an end position of scheduling information of the backscatter communication, a start point or an end point of a time unit in which the scheduling information is located, a position behind the end position of the scheduling information by a preset offset, or a position indicated by the scheduling information.

22. The method according to claim 21, wherein a start position of the last backscatter transmission in the backscatter communication is before an end moment of the transmission time of the backscatter communication, or an end position of the last backscatter transmission in the backscatter communication is before the end moment of the transmission time of the backscatter communication.

23. The method according to claim 21 or 22, wherein a unit of the maximum backscatter communication time is any one of: a minute, a second, a millisecond, a symbol, a slot, a frame, or a subframe.

24. The method according to any one of claims 21 to 23, wherein the maximum backscatter communication time is indicated by a network device, specified in a protocol, or determined by the terminal device.

25. The method according to claim 24, wherein the maximum backscatter communication time is indicated by the network device via dynamic configuration information or indicated by the network device via semi-static configuration information.

26. The method according to claim 25, wherein the dynamic configuration information is scheduling information used to schedule the backscatter communication by the network device .

27. The method according to claim 25 or 26, wherein the dynamic configuration information or the semi-static configuration information comprises at least one of: a backscatter communication time, a configuration index of the backscatter communication time, or a communication model configured by the network device, wherein the communication model is one of a plurality of communication models, and each of the plurality of communication models corresponds to a respective backscatter communication time.

28. The method according to any one of claims 21 to 27, wherein the method further comprises:
transmitting, by the terminal device, second information to the network device, wherein the second information is used by the network device to determine the maximum backscatter communication time.

29. The method according to claim 28, wherein the second information comprises the maximum backscatter communication time expected by the terminal device and/or a power storage capability of the terminal device.

30. The method according to claim 24, wherein the maximum backscatter communication time is a backscatter communication time specified in the protocol.

31. The method according to claim 24, wherein the maximum backscatter communication time is determined by the terminal device based on a service type and/or a delay requirement.

32. The method according to claim 24, wherein the maximum backscatter communication time is determined by the terminal device from a plurality of preset backscatter time candidate values.

33. The method according to any one of claims 1 to 20, wherein a start time domain position of the active transmission communication is any one of:
a position later than the last backscatter transmission in the backscatter communication by a first time interval, or the 1^{st} time unit available for the active transmission communication among time units later than the last backscatter transmission by at least the first time interval.

34. The method according to any one of claims 21 to 32, wherein a start time domain position of the active transmission communication is any one of:
a position later than the last backscatter transmission in the backscatter communication by a first time interval, or the 1^{st} time unit available for the active transmission communication among time units later than the last backscatter transmission by at least the first time interval, an end moment of the transmission time of the backscatter communication, a position later than the end moment of the transmission time of the backscatter communication by the first time interval, or the 1^{st} time unit available for the active transmission communication among time units later than the end moment of the transmission time of the backscatter communication by at least the first time interval.

35. The method according to any one of claims 1 to 34, wherein the terminal device operates in a first communication mode, the first communication mode is scheduled by a network device or actively initiated by the terminal device, and the terminal device operating in the first communication mode is allowed to switch from the backscatter communication to the active transmission communication in a case that the preset condition is met.

36. The method according to claim 35, wherein the first communication mode is scheduled by the network device via configuration information comprising any one of: dynamic configuration information, semi-static configuration information, or configured grant configuration information.

37. The method according to claim 36, wherein the configuration information indicates that the terminal device operates in the first communication mode.

38. The method according to any one of claims 1 to 37, wherein a frequency domain resource used for the backscatter communication is associated with a frequency domain resource used for the active transmission communication.

39. The method according to claim 38, wherein a center frequency of the frequency domain resource used for the backscatter communication is aligned with a center frequency of the frequency domain resource used for the active transmission communication, or a preset offset exists between the frequency domain resource used for the backscatter communication and the frequency domain resource used for the active transmission communication.

40. The method according to any one of claims 1 to 39, wherein the backscatter communication comprises a plurality of backscatter transmissions, and time domain resources used for the plurality of backscatter transmissions are consecutive or discrete in time domain.

41. The method according to any one of claims 1 to 40, wherein the backscatter communication comprises a plurality of backscatter transmissions, a first backscatter transmission and a second backscatter transmission are two adjacent backscatter transmissions in the plurality of backscatter transmissions, and the method further comprises:
if no acknowledgment information from a network device is received in a second time interval after the first backscatter transmission, performing, by the terminal device, the second backscatter transmission.

42. The method according to claim 41, wherein a unit of the second time interval is any one of: a minute, a second, a millisecond, a symbol, a slot, a frame, or a subframe.

43. The method according to claim 41 or 42, wherein a start time domain position of the second backscatter transmission is any one of:
a position later than the first backscatter transmission by the second time interval, a position later than the first backscatter transmission by the second time interval plus a preset offset, the 1^{st} time unit available for the backscatter communication among time units later than the first backscatter transmission by at least the second time interval, or the 1^{st} time unit available for the backscatter communication among time units later than the first backscatter transmission by at least the second time interval plus the preset offset.

44. A communication method, comprising:
receiving, by a network device, first information transmitted by a terminal device, wherein the first information is used by the network device to determine the maximum backscatter communication number.

45. The method according to claim 44, wherein the first information comprises the maximum backscatter communication number expected by the terminal device and/or a power storage capability of the terminal device.

46. A communication method, comprising:
receiving, by a network device, second information transmitted by a terminal device, wherein the second information is used by the network device to determine the maximum backscatter communication time.

47. The method according to claim 46, wherein the second information comprises the maximum backscatter communication time expected by the terminal device and/or a power storage capability of the terminal device.

48. A communications apparatus, comprising:
a backscatter unit, configured to perform backscatter communication; and
a switching unit, configured to: in a case that a preset condition is met, switch to active transmission communication.

49. The apparatus according to claim 48, wherein the preset condition comprises: a transmission number of the backscatter communication is greater than or equal to a maximum backscatter communication number, or a transmission time of the backscatter communication is greater than or equal to a maximum backscatter communication time.

50. The apparatus according to claim 49, wherein the apparatus further comprises a counting unit, configured to count the transmission number of the backscatter communication by using a first counter; and the preset condition comprises: a value of the first counter is greater than or equal to the maximum backscatter communication number.

51. The method according to claim 50, wherein the transmission number of the backscatter communication is an actual transmission number of the backscatter communication.

52. The method according to claim 51, wherein the value of the first counter is the actual transmission number.

53. The apparatus according to claim 50, wherein the transmission number of the backscatter communication comprises an initial transmission number and/or a retransmission number of the backscatter communication.

54. The apparatus according to claim 53, wherein an initial transmission of the backscatter communication comprises M repetitions and/or each retransmission of the backscatter communication comprises M repetitions, and the value of the first counter is a result of a ceiling operation performed on a number obtained by dividing, by M, a total number of repetitions in the initial transmission and/or retransmissions of the backscatter communication, wherein M is a positive integer.

55. The apparatus according to any one of claims 51 to 54, wherein the counting unit is further configured to: in a case of switching to the active transmission communication, count a transmission number of the active transmission communication by using a second counter.

56. The apparatus according to claim 55, wherein the apparatus further comprises a determining unit, configured to determine a transmit power of the active transmission communication based on a value of the second counter.

57. The apparatus according to any one of claims 51 to 54, wherein the counting unit is further configured to: in a case of switching to the active transmission communication, count a transmission number of the active transmission communication by using the first counter.

58. The apparatus according to claim 57, wherein the apparatus further comprises a determining unit, configured to determine a transmit power of the active transmission communication based on the value of the first counter.

59. The apparatus according to any one of claims 49 to 58, wherein the maximum backscatter communication number is indicated by a network device, specified in a protocol, or determined by the apparatus.

60. The apparatus according to claim 59, wherein the maximum backscatter communication number is indicated by the network device via dynamic configuration information or indicated by the network device via semi-static configuration information.

61. The apparatus according to claim 60, wherein the dynamic configuration information is scheduling information used to schedule the backscatter communication by the network device .

62. The apparatus according to claim 60 or 61, wherein the dynamic configuration information or the semi-static configuration information comprises at least one of: a backscatter communication number, a configuration index of the backscatter communication number, or a communication model configured by the network device, wherein the communication model is one of a plurality of communication models, and each of the plurality of communication models corresponds to a respective backscatter communication number.

63. The apparatus according to any one of claims 49 to 62, wherein the apparatus further comprises a transmitting unit, configured to transmit first information to the network device, wherein the first information is used by the network device to determine the maximum backscatter communication number.

64. The apparatus according to claim 63, wherein the first information comprises the maximum backscatter communication number expected by the apparatus and/or a power storage capability of the apparatus.

65. The apparatus according to claim 59, wherein the maximum backscatter communication number is a backscatter communication number specified in the protocol.

66. The apparatus according to claim 59, wherein the maximum backscatter communication number is determined by the apparatus based on a service type and/or a delay requirement.

67. The apparatus according to claim 59, wherein the maximum backscatter communication number is determined by the apparatus from a plurality of preset backscatter number candidate values.

68. The apparatus according to claim 49, wherein a start moment of the transmission time of the backscatter communication is any one of:
a start position of the 1^{st} backscatter transmission in the backscatter communication, an end position of the 1^{st} backscatter transmission, a start point or an end point of a time unit in which the start position of the 1^{st} backscatter transmission is located, a start point or an end point of a time unit in which the end position of the 1^{st} backscatter transmission is located, an end position of scheduling information of the backscatter communication, a start point or an end point of a time unit in which the scheduling information is located, a position behind the end position of the scheduling information by a preset offset, or a position indicated by the scheduling information.

69. The apparatus according to claim 67 or 68, wherein a start position of the last backscatter transmission in the backscatter communication is before an end moment of the transmission time of the backscatter communication, or an end position of the last backscatter transmission in the backscatter communication is before the end moment of the transmission time of the backscatter communication.

70. The apparatus according to claims 67 to 69, wherein a unit of the maximum backscatter communication time is any one of: a minute, a second, a millisecond, a symbol, a slot, a frame, or a subframe.

71. The apparatus according to any one of claims 67 to 70, wherein the maximum backscatter communication time is indicated by the network device, specified in the protocol, or determined by the apparatus.

72. The apparatus according to claim 71, wherein the maximum backscatter communication time is indicated by the network device via dynamic configuration information or indicated by the network device via semi-static configuration information.

73. The apparatus according to claim 72, wherein the dynamic configuration information is scheduling information used to schedule the backscatter communication by the network device .

74. The apparatus according to claim 72 or 73, wherein the dynamic configuration information or the semi-static configuration information comprises at least one of: a backscatter communication time, a configuration index of the backscatter communication time, or a communication model configured by the network device, wherein the communication model is one of a plurality of communication models, and each of the plurality of communication models corresponds to a respective backscatter communication time.

75. The apparatus according to any one of claims 67 to 74, wherein the apparatus further comprises a transmitting unit, configured to transmit second information to the network device, wherein the second information is used by the network device to determine the maximum backscatter communication time.

76. The apparatus according to claim 75, wherein the second information comprises the maximum backscatter communication time expected by the apparatus and/or a power storage capability of the apparatus.

77. The apparatus according to claim 71, wherein the maximum backscatter communication time is a backscatter communication time specified in the protocol.

78. The apparatus according to claim 71, wherein the maximum backscatter communication time is determined by the apparatus based on a service type and/or a delay requirement.

79. The apparatus according to claim 71, wherein the maximum backscatter communication time is determined by the apparatus from a plurality of preset backscatter time candidate values.

80. The apparatus according to any one of claims 48 to 67, wherein a start time domain position of the active transmission communication is any one of: a position later than the last backscatter transmission in the backscatter communication by a first time interval, or the 1^{st} time unit available for the active transmission communication among time units later than the last backscatter transmission by at least the first time interval.

81. The apparatus according to any one of claims 68 to 79, wherein a start time domain position of the active transmission communication is any one of: a position later than the last backscatter transmission in the backscatter communication by a first time interval, or the 1^{st} time unit available for the active transmission communication among time units later than the last backscatter transmission by at least the first time interval, an end moment of the transmission time of the backscatter communication, a position later than the end moment of the transmission time of the backscatter communication by the first time interval, or the 1^{st} time unit available for the active transmission communication among time units later than the end moment of the transmission time of the backscatter communication by at least the first time interval.

82. The apparatus according to any one of claims 48 to 81, wherein the apparatus operates in a first communication mode, the first communication mode is scheduled by a network device or actively initiated by the apparatus, and the apparatus operating in the first communication mode is allowed to switch from the backscatter communication to the active transmission communication in a case that the preset condition is met.

83. The apparatus according to claim 82, wherein the first communication mode is scheduled by the network device via configuration information comprising any one of: dynamic configuration information, semi-static configuration information, or configured grant configuration information.

84. The apparatus according to claim 83, wherein the configuration information indicates that the apparatus operates in the first communication mode.

85. The apparatus according to any one of claims 48 to 84, wherein a frequency domain resource used for the backscatter communication is associated with a frequency domain resource used for the active transmission communication.

86. The apparatus according to claim 85, wherein a center frequency of the frequency domain resource used for the backscatter communication is aligned with a center frequency of the frequency domain resource used for the active transmission communication, or a preset offset exists between the frequency domain resource used for the backscatter communication and the frequency domain resource used for the active transmission communication.

87. The apparatus according to any one of claims 48 to 86, wherein the backscatter communication comprises a plurality of backscatter transmissions, and time domain resources used for the plurality of backscatter transmissions are consecutive or discrete in time domain.

88. The apparatus according to any one of claims 48 to 87, wherein the backscatter communication comprises a plurality of backscatter transmissions, a first backscatter transmission and a second backscatter transmission are two adjacent backscatter transmissions in the plurality of backscatter transmissions, and the backscatter unit is further configured to: if no acknowledgment information from a network device is received in a second time interval after the first backscatter transmission, perform the second backscatter transmission.

89. The apparatus according to claim 88, wherein a unit of the second time interval is any one of: a minute, a second, a millisecond, a symbol, a slot, a frame, or a subframe.

90. The apparatus according to claim 88 or 89, wherein a start time domain position of the second backscatter transmission is any one of: a position later than the first backscatter transmission by the second time interval, a position later than the first backscatter transmission by the second time interval plus a preset offset, the 1^{st} time unit available for the backscatter communication among time units later than the first backscatter transmission by at least the second time interval, or the 1^{st} time unit available for the backscatter communication among time units later than the first backscatter transmission by at least the second time interval plus the preset offset.

91. A communications apparatus, comprising:
a receiving unit, configured to receive first information transmitted by a terminal device, wherein the first information is used by the apparatus to determine the maximum backscatter communication number.

92. The apparatus according to claim 91, wherein the first information comprises the maximum backscatter communication number expected by the terminal device and/or a power storage capability of the terminal device.

93. A communications apparatus, comprising:
a receiving unit, configured to receive second information transmitted by a terminal device, wherein the second information is used by the apparatus to determine the maximum backscatter communication time.

94. The apparatus according to claim 93, wherein the second information comprises the maximum backscatter communication time expected by the terminal device and/or a power storage capability of the terminal device.

95. A communications apparatus, comprising a memory, a transceiver, and a processor, wherein the memory is configured to store a program, the processor performs data transmission and receiving by using the transceiver, and the processor is configured to invoke the program in the memory to perform the method according to any one of claims 1 to 43.

96. A communications apparatus, comprising a memory, a transceiver, and a processor, wherein the memory is configured to store a program, the processor performs data transmission and receiving by using the transceiver, and the processor is configured to invoke the program in the memory to perform the method according to any one of claims 44 to 47.

97. A communications apparatus, comprising a processor, configured to invoke a program from a memory to perform the method according to any one of claims 1 to 43.

98. A communications apparatus, comprising a processor, configured to invoke a program from a memory to perform the method according to any one of claims 44 to 47.

99. A chip, comprising a processor, configured to invoke a program from a memory to cause a device installed with the chip to perform the method according to any one of claims 1 to 43.

100. A chip, comprising a processor, configured to invoke a program from a memory to cause a device installed with the chip to perform the method according to any one of claims 44 to 47.

101. A computer-readable storage medium, wherein the computer-readable storage medium stores a program, and the program causes a computer to perform the method according to any one of claims 1 to 43.

102. A computer-readable storage medium, wherein the computer-readable storage medium stores a program, and the program causes a computer to perform the method according to any one of claims 44 to 47.

103. A computer program product, comprising a program, wherein the program causes a computer to perform the method according to any one of claims 1 to 43.

104. A computer program product, comprising a program, wherein the program causes a computer to perform the method according to any one of claims 44 to 47.

105. A computer program, wherein the computer program causes a computer to perform the method according to any one of claims 1 to 43.

106. A computer program, wherein the computer program causes a computer to perform the method according to any one of claims 44 to 47.
